# FASCICULE DE BREVET EUROPEEN

(11) **EP 3 961 006 B1**
(45) Date de publication et mention de la délivrance du brevet: **17.05.2023**
(21) Numéro de dépôt: 21192730.6
(22) Date de dépôt: 24.08.2021
(51) Int. Cl.: F01P 11/02, B04C 5/04, B04C 5/103, B04C 5/13, B04C 5/14, B04C 5/28

(54) **DISPOSITIF DE SÉPARATION PAR EFFET VORTEX POUR UN CIRCUIT DE TRANSFERT DE FLUIDE**
WIRBELABSCHEIDEVORRICHTUNG FÜR EINEN FLUIDTRANSFERKREISLAUF
DEVICE FOR SEPARATION BY VORTEX EFFECT FOR A FLUID TRANSFER CIRCUIT

(30) Priorité: 28.08.2020 FR 2008788
(43) Date de publication de la demande: 02.03.2022
(73) Titulaire: HUTCHINSON, 75008 Paris (FR)
(72) Inventeur: GROUILLET, Philippe, 45700 Conflans sur Loing (FR); ROUPRICH, Bastien, 45260 Noyers (FR)
(74) Mandataire: Gevers & Orès

(56) Documents cités:
- EP-A1- 0 726 386
- WO-A1-2004/001204
- DE-C- 841 977
- FR-A3- 3 082 441

## Description

### Domaine technique de l'invention

La présente invention concerne un dispositif de séparation par effet vortex pour un circuit de transfert de fluide, en particulier d'un véhicule automobile, tel qu'un circuit caloporteur de véhicule automobile.

### Arrière-plan technique

Certains fluides sont susceptibles de contenir des bulles de gaz. C'est notamment le cas du fluide caloporteur utilisé dans un circuit caloporteur d'un véhicule automobile, qui comprend un mélange d'eau et de glycol et peut comporter des bulles d'air ou de vapeur.

Il est préférable de séparer ces bulles de gaz du fluide de façon à optimiser les performances du circuit, et il est pour cela connu d'utiliser un dispositif de séparation par effet vortex.

Un tel dispositif comprend une chambre interne reliée à une entrée de fluide et à deux sorties, respectivement de fraction liquide et de fraction gazeuse du fluide. Le dispositif est configuré de façon à ce que le fluide arrivant par l'entrée soit mis en rotation autour d'un axe A dans la chambre pour former un vortex de séparation des fractions liquide et gazeuse. L'effet centrifuge du vortex permet de séparer par différence de densités la fraction liquide radialement vers l'extérieur (par rapport à l'axe A) et la fraction gazeuse radialement vers l'intérieur. La fraction liquide est expulsée de la chambre par la sortie liquide qui est en général positionnée à la périphérie externe de la chambre, et sa fraction gazeuse est expulsée de la chambre par la sortie gazeuse qui est en général située au niveau de l'axe A.

Le document FR3082441 A3 divulgue un dispositif de dégazage selon le préambule de la revendication 1.

Il existe également des dispositifs pour double circuits, c'est-à-dire que deux circuits de circulation de deux fluides (identiques ou différents) sont connectés à un même dispositif de séparation par effet vortex. Cependant, les solutions de l'art antérieur ne permettent pas un fonctionnement optimisé du dispositif, notamment pour des débits de fluide supérieurs à environ 10 L/min. En outre, ces dispositifs ne permettent pas d'isoler efficacement les deux circuits indépendants, ce qui peut avoir des conséquences négatives, notamment en terme d'échanges thermiques entre les deux circuits, en particulier lorsque ces derniers fonctionnent à des températures différentes. La présente invention a notamment pour but de résoudre tout ou partie des problèmes précités.

### Résumé de l'invention

L'invention concerne un dispositif de dégazage par effet vortex pour un circuit de transfert de fluide, en particulier d'un véhicule automobile, ce dispositif comportant :
- une première chambre interne reliée à une première entrée de fluide ainsi qu'à une première sortie de fraction liquide et à une deuxième sortie de fraction gazeuse, la deuxième sortie s'étendant vers le haut le long d'un axe A,
- un premier déflecteur en saillie à l'intérieur de la première chambre pour forcer le fluide arrivant par la première entrée à former un vortex dans la première chambre autour dudit axe A, afin de séparer les fractions liquide et gazeuse de ce fluide, qui sont expulsées respectivement par les première et deuxième sorties,
caractérisé en ce qu'il comprend en outre :
- une seconde chambre interne reliée à une deuxième entrée de fluide ainsi qu'à une troisième sortie de fraction liquide et à une quatrième sortie de fraction gazeuse, la quatrième sortie de fraction gazeuse s'étendant au moins en partie vers le haut le long dudit axe A, et
- un second déflecteur en saillie à l'intérieur de la seconde chambre pour forcer le fluide arrivant par la deuxième entrée à former un vortex dans la seconde chambre autour dudit axe A, afin de séparer les fractions liquide et gazeuse de ce fluide, qui sont expulsées respectivement par les troisième et quatrième sorties,
et en ce que la seconde chambre est située au-dessus de la première chambre, la deuxième sortie s'étendant à travers la seconde chambre jusqu'au niveau de la quatrième sortie.

L'invention propose ainsi de fournir notamment à la première chambre une deuxième sortie de fraction gazeuse qui remonte jusqu'au niveau de la quatrième sortie. Cette disposition permet en particulier d'éviter que les bulles collectées dans la première chambre et évacuées par la deuxième sortie ne soient entraînées dans la seconde chambre. Cette disposition permet également d'éviter les échanges de flux entre les deux chambres, et donc de limiter les échanges thermiques entre les deux chambres et donc entre deux sous circuits indépendants du circuit alimentant respectivement les première et seconde chambres. Cette limitation des échanges thermique, permet notamment d'avoir des sous circuits fonctionnant à des températures différentes tout en partageant un dispositif de séparation commun. L'invention permet en outre de fonctionner efficacement à des débits importants, en particulier supérieurs à 10 L/min.

Le dispositif selon l'invention peut comprendre une ou plusieurs des caractéristiques suivantes, prises isolément les unes des autres ou en combinaison les unes avec les autres :
- La première entrée et la première sortie sont situées à des positions différentes le long de l'axe A ;
- La deuxième entrée et la troisième sortie sont situées à des positions différentes le long de l'axe A ;
- La deuxième sortie s'étend le long de l'axe A jusqu'au-dessus de la deuxième entrée ;
- La deuxième sortie comprend une extrémité supérieure libre qui est écartée axialement de la quatrième sortie ou qui est entourée par cette quatrième sortie ;
- Le dispositif peut également comprendre :
   - un corps de forme générale cylindrique dont une portion inférieure comprend la première chambre et dont une portion supérieure comprend la seconde chambre, et
   - des embouts de raccordement fluidique en saillie sur le corps qui forme respectivement les première et deuxième entrées, ainsi que les première, troisième et quatrième sorties ;
- Le dispositif peut également être réalisé à partir de trois pièces :
   - une première pièce formant la portion inférieure du corps ainsi que les embouts de raccordement de la première entrée et de la première sortie,
   - une deuxième pièce formant la portion supérieure du corps ainsi que les embouts de raccordement de la deuxième entrée et des troisième et quatrième sortie, et
   - une troisième pièce montée à l'intérieur du corps et formant la deuxième sortie ;
- La troisième pièce se présente sous la forme d'un entonnoir inversé et comprend une cheminée supérieure formant la deuxième sortie et une coupole inférieure qui est montée dans le corps de façon à délimiter les première et seconde chambres, cette coupole comportant un orifice central aligné sur l'axe A et débouchant dans ladite cheminée ;
- La coupole comprend une périphérie externe configurée pour être serrée axialement et/ou radialement entre des bords de jonction des première et deuxième pièces ;
- La coupole comprend à sa périphérie externe au moins un élément d'indexage configuré pour coopérer par complémentarité de formes avec un élément correspondant de la première pièce de façon à imposer une position angulaire prédéterminée autour de l'axe A de la troisième pièce vis-à-vis de la première pièce ;
- Au moins un joint annulaire d'étanchéité est monté entre la périphérie externe de la coupole et la première pièce et/ou entre la périphérie externe de la coupole et la deuxième pièce ;
   -- Le second déflecteur est intégré à la deuxième pièce et/ou le premier déflecteur est intégré à la troisième pièce ;
   -- Le premier déflecteur est relié à la coupole et s'étend le long de l'axe A depuis l'intérieur jusqu'à l'extérieur de la coupole ;
   -- Le dispositif est constitué en matériau plastique ;
- La deuxième sortie a une section minimale de passage S1 et la quatrième sortie a une section minimale de passage S2, avec S1 =k.S2, k étant compris entre 0,8 et 1,2 et de préférence égal à 1 ;

-- Les entrées ont chacune un diamètre interne moyen compris entre 8 et 32mm, de préférence entre 12 et 20mm, et par exemple de 16mm ;
-- Les première et troisième sorties ont chacune un diamètre interne moyen compris entre 8 et 32mm, de préférence entre 12 et 20mm, et par exemple de 16mm ;
-- La quatrième sortie a un diamètre interne moyen compris entre 6 et 22mm, de préférence entre 12 et 20mm, et par exemple de 16mm ;
-- Le dispositif ou le corps a un diamètre externe compris entre 40 et 80mm, de préférence entre 50 et 60mm, et par exemple de l'ordre de 55mm ;
-- Le dispositif ou le corps a une longueur ou hauteur mesurée le long de l'axe A, qui est comprise entre 80 et 180mm, de préférence entre 110 et 150mm, et par exemple de 130mm ;
-- La distance mesurée le long de l'axe A, entre l'extrémité libre supérieure de la deuxième sortie et la deuxième entrée est supérieure ou égale à 5mm, et de préférence inférieure ou égale à 15mm.

L'invention concerne également un circuit de transfert de fluide, en particulier d'un véhicule automobile, comportant au moins un dispositif tel que décrit précédemment.

Les première et seconde chambres sont par exemple raccordées par l'intermédiaire de la quatrième sortie à un vase d'expansion commun.

L'invention concerne en outre un procédé d'utilisation d'un dispositif tel que décrit précédemment dans un circuit de transfert de fluide, en particulier d'un véhicule automobile, dans lequel un même fluide, par exemple caloporteur, circule dans les première et seconde chambres, ces fluides étant à une même pression et à des températures différentes.

### Brève description des figures

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
[Fig.1] La figure 1 représente une vue schématique en perspective d'un dispositif de séparation selon l'invention ;
[Fig.2] La figure 2 représente une vue schématique en perspective et en coupe du dispositif ;
[Fig.3] La figure 3 représente une vue schématique en perspective et en coupe d'une première pièce du dispositif ;
[Fig.4a-4b] Les figures 4a et 4b représentent une vue schématique en perspective et en coupe d'une deuxième pièce du dispositif ;
[Fig.5a-5b] Les figures 5a et 5b représentent une vue schématique respectivement en perspective et en vue de dessous d'une troisième pièce du dispositif ;
[Fig.6a-6b] Les figures 6a et 6b représentent une vue schématique en perspective respectivement de la troisième pièce et de la première pièce ; [Fig.7] La figure 7 représente une vue schématique en perspective et en coupe du dispositif ;
[Fig.8a-8c] Les figures 8a, 8b, 8c représentent une vue schématique en perspective de différentes variantes du dispositif ;
[Fig.9a-9b] Les figures 9a et 9b représentent une vue schématique en perspective de variantes d'embouts du dispositif ; et
[Fig.10] La figure 10 montre le dispositif raccordé à un vase d'expansion commun.

### Description détaillée de l'invention

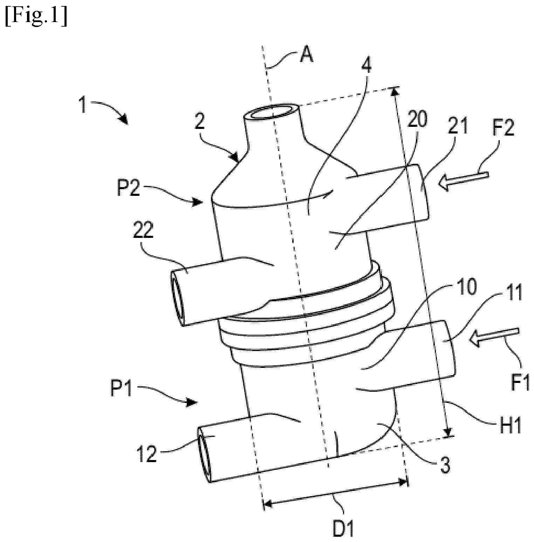

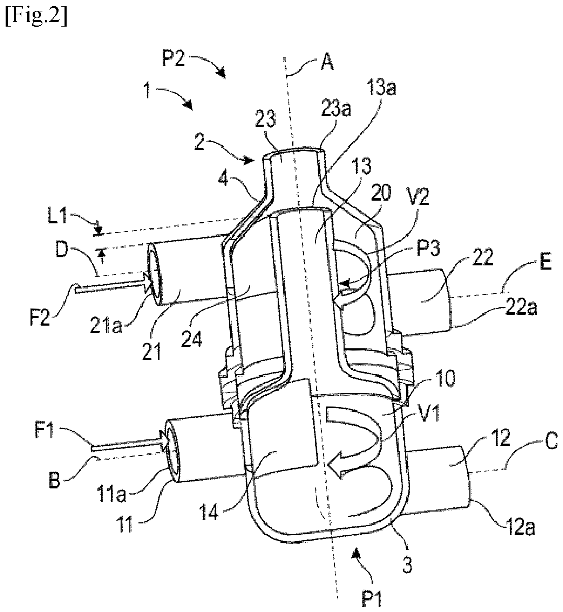

Les figures 1 et 2 illustrent un dispositif 1 selon l'invention de dégazage par effet vortex pour un circuit de transfert d'un premier fluide F1 et d'un second fluide F2 notamment des fluides caloporteurs utilisés dans un véhicule automobile. Le circuit comprend par exemple un premier sous circuit dans lequel circule le premier fluide F1 et un second sous circuit dans lequel circule le second fluide F2. Les sous circuits sont en particulier indépendants l'un de l'autre. Les fluides F1, F2 sont par exemple identiques, et sont notamment un mélange d'eau et de glycol à l'état liquide, dans lequel circulent des bulles d'air ou de vapeur. Le dispositif 1 permet la séparation des fractions liquide et gazeuse des fluides F1, F2. Dans la présente demande, on entend par « fraction gazeuse » un gaz pouvant contenir des gouttelettes de liquide voire un liquide enrichi en gaz.

Le dispositif 1 est notamment constitué en matériau plastique.

Le dispositif 1 comporte une première chambre interne 10 reliée à une première entrée 11 du premier fluide F1 ainsi qu'à une première sortie 12 de fraction liquide et à une deuxième sortie 13 de fraction gazeuse. La deuxième sortie 13 s'étend vers le haut le long d'un axe A. La première entrée 11 et la première sortie 12 sont par exemple situées à des positions différentes le long de l'axe A. La première entrée 11 est par exemple située au-dessus de la première sortie 12.

La première chambre 10, la première entrée 11, la première sortie 12 et la deuxième sortie 13 font partie du premier sous circuit.

Le dispositif 1 comprend en outre une seconde chambre interne 20. La seconde chambre 20 est située au-dessus de la première chambre 10 selon l'axe A. La seconde chambre interne 20 est reliée à une deuxième entrée 21 du second fluide F2 ainsi qu'à une troisième sortie 22 de fraction liquide et à une quatrième sortie 23 de fraction gazeuse. La quatrième sortie 23 de fraction gazeuse s'étend au moins en partie vers le haut le long de l'axe A. La deuxième entrée 21 et la troisième sortie 22 sont par exemple situées à des positions différentes le long de l'axe A. La deuxième entrée 21 est par exemple située au-dessus de la troisième sortie 22.

La seconde chambre 20, la deuxième entrée 21, la troisième sortie 22 et la quatrième sortie 23 font partie du second sous circuit.

Sauf précision contraire, les adjectifs intérieur/interne et extérieur/externe sont utilisés en référence à une direction radiale de sorte que la partie intérieure (i.e. radialement intérieure) d'un élément est plus proche de l'axe A que la partie extérieure (i.e. radialement extérieure) du même élément. De même, les termes au-dessus/en dessous et supérieur/inférieur sont utilisés en référence à la position des éléments le long de l'axe A par rapport au sol. La première et la deuxième entrées 11, 21 ont notamment chacune un diamètre interne moyen compris entre 8 et 32mm, de préférence entre 12 et 20mm, et par exemple de 16mm.

La première et la troisième sortie 12, 22 ont notamment chacune un diamètre interne moyen compris entre 8 et 32mm, de préférence entre 12 et 20mm, et par exemple de 16mm.

La quatrième sortie 23 a un diamètre interne moyen compris entre 6 et 22mm, de préférence entre 12 et 20mm, et par exemple de 16mm.

Le dispositif 1 comporte également un premier déflecteur 14 en saillie à l'intérieur de la première chambre 10. Le premier déflecteur 14 permet de guider et accélérer le premier fluide F1 arrivant par la première entrée 11. Ainsi, en arrivant par la première entrée 11, le premier fluide F1 est forcé à former un vortex dans la première chambre 10 autour de l'axe A, afin de séparer les fractions liquide et gazeuse du premier fluide F1. Les fractions liquide et gazeuse du premier fluide F1 sont expulsées respectivement par les première 12 et deuxième 13 sorties.

Le dispositif 1 comprend également un second déflecteur 24 en saillie à l'intérieur de la seconde chambre 20. Le second déflecteur 24 permet de guider et accélérer le second fluide F2 arrivant par la deuxième entrée 21. Ainsi, en arrivant par la deuxième entrée 21, le second fluide F2 est forcé à former un vortex dans la seconde chambre 20 autour de l'axe A, afin de séparer les fractions liquide et gazeuse du second fluide F2. Les fractions liquide et gazeuse du second fluide F2 sont expulsées respectivement par les troisième 22 et quatrième sorties 23.

La deuxième sortie 13 s'étend à travers la seconde chambre 20 jusqu'au niveau de la quatrième sortie 23. La deuxième sortie 13 s'étend le long de l'axe A en particulier jusqu'au-dessus de la deuxième entrée 21. Ainsi, les bulles du circuit bas, c'est à dire du premier sous circuit, ne sont pas entraînées par le fluide circulant dans la seconde chambre 20, c'est-à-dire dans le second sous circuit.

La deuxième sortie 13 comprend une extrémité supérieure libre 13a qui est écartée axialement de la quatrième sortie 23 ou qui est entourée par cette quatrième sortie 23. La distance L1 mesurée le long de l'axe A, entre l'extrémité libre supérieure 13a de la deuxième sortie 13 et la deuxième entrée 21 est supérieure ou égale à 5mm, et de préférence inférieure ou égale à 15mm. La deuxième sortie 13 a une section minimale de passage S1 et la quatrième sortie 23 a une section minimale de passage S2, avec S1=k.S2, k étant en particulier compris entre 0,8 et 1,2 et de préférence égal à 1. Ainsi, les sections de passage S1, S2 des bulles des deux chambres 10, 20 sont identiques ou très voisines. Les capacités de dégazage et de remplissage de chacune des chambres 10, 20 sont alors équilibrées.

La deuxième sortie 13 est en particulier située au centre de la seconde chambre 20 de sorte qu'elle ne perturbe pas la circulation tangentielle et/ou périphérique du second fluide F2 dans la seconde chambre 20.

Les formes internes des chambres, et en particulier celles des déflecteurs 14, 24 ne sont pas nécessairement identiques. Cela permet ainsi de s'adapter aux conditions particulières de débit de fluide et de quantité de gaz de chaque sous circuit.

Le dispositif 1 comprend un corps 2 de forme générale cylindrique dont l'axe de révolution est confondu avec l'axe A et s'étend ici verticalement. Le corps 2 comprend une portion inférieure 3 comprenant la première chambre 10. Le corps 2 comprend une portion supérieure 4 comprenant la seconde chambre 20.

Le dispositif 1 ou le corps 2 a un diamètre externe D1, mesuré perpendiculairement à l'axe A, compris entre 40 et 80mm, de préférence entre 50 et 60mm, et par exemple de l'ordre de 55mm.

Le dispositif 1 ou le corps 2 a une longueur ou hauteur H1, mesurée le long de l'axe A, qui est comprise entre 80 et 180mm, de préférence entre 110 et 150mm, et par exemple de 130mm.

Le dispositif 1 comprend également des embouts 11a, 21a, 12a, 22a, 23a de raccordement fluidique en saillie sur le corps 2 qui forme respectivement les première 11 et deuxième 21 entrées, ainsi que les première 12, troisième 22 et quatrième 23 sorties.

L'embout 11a correspond à la première entrée 11. Il s'étend ici le long d'un axe B. L'axe B est situé dans un plan perpendiculaire à l'axe A. Cet axe B est orienté de manière tangentielle à une circonférence centrée sur l'axe A. L'embout 21a correspond à la deuxième entrée 21. Il s'étend ici le long d'un axe D. L'axe D est situé dans un plan perpendiculaire à l'axe A. Cet axe D est orienté de manière tangentielle à une circonférence centrée sur l'axe A. L'embout 12a correspond à la première sortie 12. Il s'étend ici le long d'un axe C. L'axe C est situé dans un plan perpendiculaire à l'axe A. Cet axe C est orienté de manière tangentielle à une circonférence centrée sur l'axe A. L'embout 12a est situé ici en dessous de l'embout 11a selon l'axe A. L'embout 22a correspond à la troisième sortie 22. Il s'étend ici le long d'un axe E. L'axe E est situé dans un plan perpendiculaire à l'axe A. Cet axe E est orienté de manière tangentielle à une circonférence centrée sur l'axe A. L'embout 22a est situé ici en dessous de l'embout 21a selon l'axe A.

Les axes B, C, D, E sont ici dans un même plan, notamment parallèle à l'axe A, mais pourraient être disposés dans des plans distincts.

La position tangentielle des première et deuxième entrées 11, 21, permet de renforcer l'effet vortex du dispositif 1. De la même manière, la position tangentielle des première et troisième sorties 12, 22, permet de renforcer l'effet vortex du dispositif 1. Les première et deuxième entrées 11, 21, ainsi que les première et troisième sorties 12, 22 peuvent être situées dans une orientation relative différente du mode de réalisation illustré sur les figures 1 et 2, tout en restant positionnées de manière tangentielle aux chambres 10, 20, de manière à pouvoir s'adapter à l'architecture du circuit dans lequel le dispositif 1 sera monté.

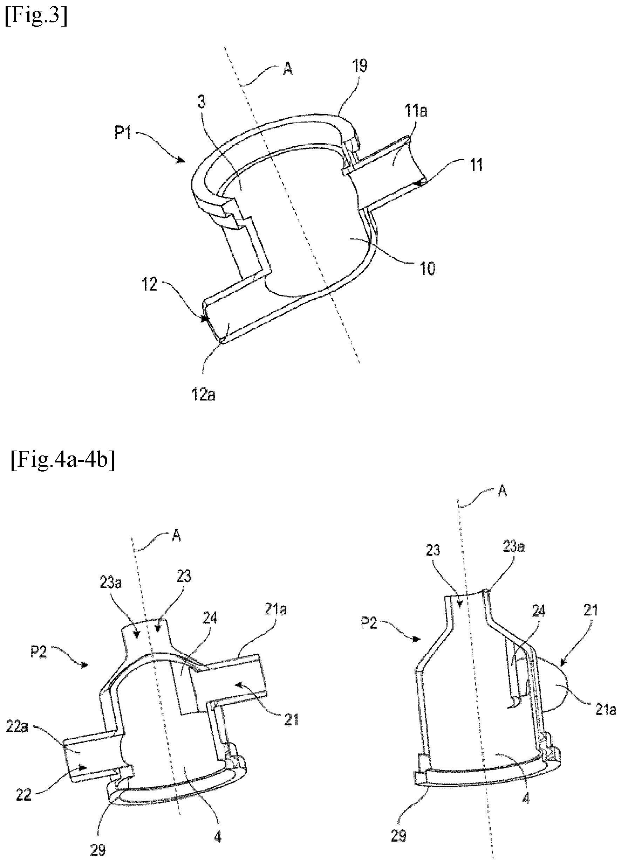

Ainsi, dans la présente invention, les entrées du fluide dans chaque chambre sont optimisées (verticalement et horizontalement) pour renforcer l'effet vortex pour les deux sous circuits et les deux chambres ont été superposées. Chaque chambre est ainsi similaire à un système simple flux optimisé. Comme représenté sur les figures 3, 4a, 4b, 5a, 5b, 6a, 6b, le dispositif 1 est en particulier réalisé à partir de trois pièces P1, P2, P3.

Comme illustrée sur la figure 3, une première pièce P1 forme la portion inférieure 3 du corps 2 ainsi que les embouts 11a, 12a de raccordement formant la première entrée 11 et la première sortie 12.

Comme illustrée sur les figures 4a et 4b, une deuxième pièce P2 forme la portion supérieure 4 du corps 2 ainsi que les embouts 21a, 22a, 23a de raccordement formant la deuxième entrée 21 et les troisième 22 et quatrième sortie 23. Le second déflecteur 24 est notamment intégré à la deuxième pièce P2.

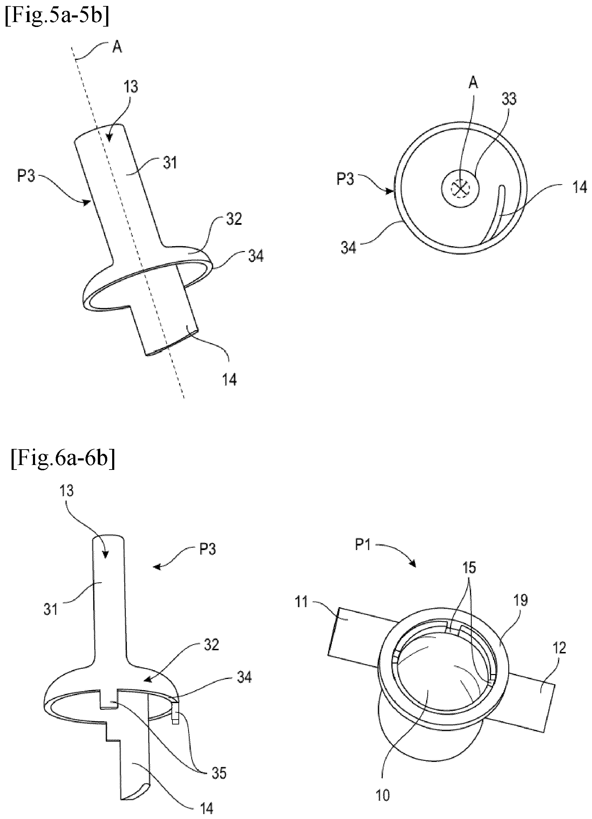

Comme illustrée sur les figures 5a et 5b, une troisième pièce P3 montée à l'intérieur du corps 2 forme la deuxième sortie 13.

La troisième pièce P3 se présente sous la forme d'un entonnoir inversé. La troisième pièce P3 comprend une cheminée supérieure 31 formant la deuxième sortie 13. La troisième pièce P3 comprend également une coupole inférieure 32.

La coupole inférieure 32 est montée dans le corps 2 de façon à délimiter les première et seconde chambres (non représentées sur les figures 5a et 5b). Cette coupole 32 comporte un orifice central 33 aligné sur l'axe A et débouchant dans la cheminée 31.

La coupole 32 comprend une périphérie externe 34 configurée pour être serrée axialement et/ou radialement entre des bords de jonction des première P1 et deuxième P2 pièces (référencés respectivement 19 sur la figure 3 et 29 sur les figures 4a et 4b). La coupole 32 et notamment son serrage entre les bords de jonction des première et deuxième pièces, permet ainsi de séparer de manière étanche la première et la seconde chambres. Le premier déflecteur 14 est par exemple intégré à la troisième pièce P3. Le premier déflecteur 14 est notamment relié à la coupole 32 et s'étend le long de l'axe A depuis l'intérieur jusqu'à l'extérieur de la coupole 32.

Grâce à invention, une pièce unique (la troisième pièce P3) sépare les deux volumes internes des deux chambres et assure le guidage des bulles capturées dans la première chambre.

Comme illustrée sur les figures 6a et 6b, la coupole 32 comprend par exemple à sa périphérie externe 34 au moins un élément d'indexage 35. Cet élément d'indexage 35 est configuré pour coopérer par complémentarité de formes avec un élément 15 correspondant de la première pièce P1 de façon à imposer une position angulaire prédéterminée autour de l'axe A de la troisième pièce P3 vis-à-vis de la première pièce P1. Cela permet notamment de s'assurer du bon positionnement du premier déflecteur 14 (lorsqu'il est porté par la troisième pièce P3) par rapport à la première entrée 11 de la première pièce P1. Le dispositif 1 comprend ici deux éléments d'indexage 35 qui sont en particulier deux ergots. Le dispositif 1 comprend ici deux éléments 15 correspondant de la première pièce P1 qui sont en particulier deux nervures, de forme complémentaire aux ergots de manière à permettre l'indexage de la troisième pièce P3 sur la première pièce P1 autour de l'axe A.

Ainsi, le premier fluide F1 pénètre dans la chambre 10 par l'entrée 11 puis est mis en rotation du fait notamment de la position tangentielle de cette première entrée 11. Le premier fluide F1 subit ainsi un mouvement de rotation et est en outre guidé et accéléré par le premier déflecteur 14. Le premier fluide F1 tourne et circule du haut vers le bas dans la première chambre 10 en formant le vortex selon une direction référencée V1 sur la figure 2. Pendant cette rotation, la fraction de liquide plus lourde se sépare de la fraction gazeuse plus légère par effet centrifuge. La fraction liquide s'écoule à travers la première sortie 12 à orientation tangentielle, et la fraction gazeuse remonte dans la cheminée 31 en passant par l'orifice 33 de la coupole 32 le long de l'axe A et est évacuée par la deuxième sortie 13. Cela permet d'éviter que les bulles collectées dans la première chambre 10 ne soient entraînées dans la chambre 20. Le faible diamètre de la cheminée 31 permet de limiter la perturbation du fonctionnement de la seconde chambre 20.

Également, le second fluide F2 pénètre dans la seconde chambre 20 par la deuxième entrée 21 puis est mis en rotation du fait de la position tangentielle de cette deuxième entrée 21. Le second fluide F2 subit ainsi un mouvement de rotation et est en outre guidé et accéléré par le second déflecteur 24. Le second fluide F2 tourne et circule du haut vers le bas dans la seconde chambre 20 en formant le vortex selon une direction référencée V2 sur la figure 2. Pendant cette rotation, la fraction de liquide plus lourde se sépare de la fraction gazeuse plus légère par effet centrifuge. La fraction liquide s'écoule à travers la troisième sortie 22 à orientation tangentielle, et la fraction gazeuse remonte le long de l'axe A et est évacuée par la quatrième sortie 23.

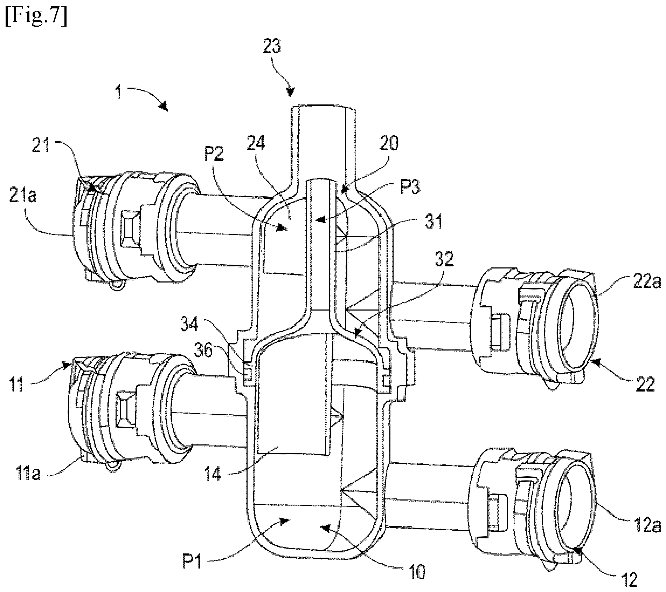

Comme représenté sur la figure 7, au moins un joint annulaire 36 d'étanchéité peut être monté entre la périphérie externe 34 de la coupole 32 et la première pièce P1 et/ou entre la périphérie externe 34 de la coupole 32 et la deuxième pièce P2. Le joint annulaire 36 permet de limiter au maximum les échanges entre les deux chambres 10, 20 et donc entre les deux sous circuits.

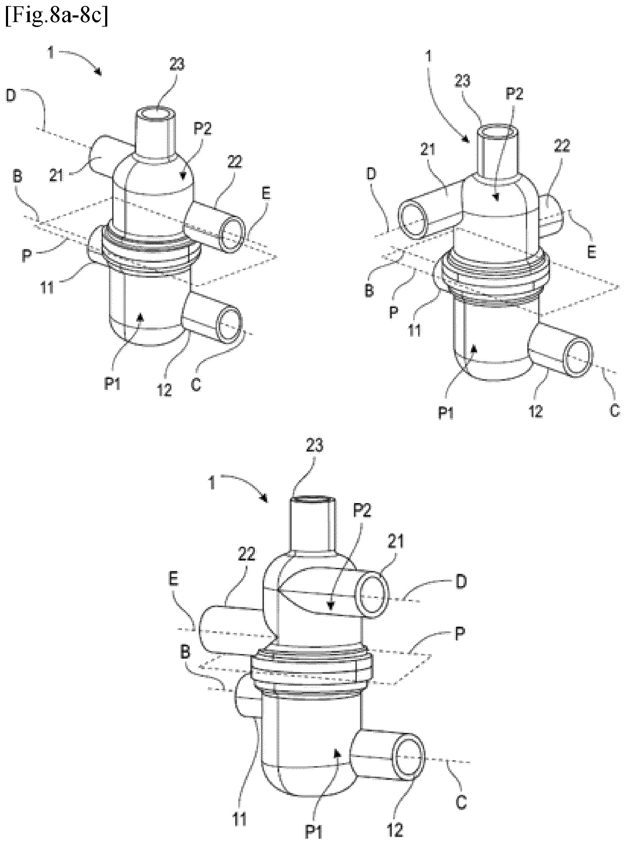

Comme illustré sur les figures 8a, 8b, 8c les bords circulaires de jonction des première et deuxième pièces P1, P2 peuvent avoir une connexion coplanaire qui s'étend selon un plan P. Les bords circulaires de jonction de la première pièce P1 sont configurés pour se positionner contre les bords circulaires de la deuxième pièce P2 selon le plan P. Les bords circulaires de jonction des deux pièces P1, P2, ayant une connexion coplanaires, il est possible de proposer différentes variantes d'orientations angulaire de la première pièce P1 par rapport à la deuxième pièce P2 autour de l'axe A afin notamment de s'adapter au mieux aux circuits dans lequel le dispositif 1 va être positionné. En outre, ces différentes configurations du dispositif 1 peuvent être réalisées avec un seul outillage de moulage des pièces P1, P2. On remarque que dans toutes les variantes de réalisations illustrées, les première et deuxième entrées 11, 21 ainsi que les première et troisième sorties 21, 22 sont toujours positionnées de façon tangentielles. En outre, la première entrée 11 est toujours située au-dessus de le première sortie 12, et la deuxième entrée 21 est toujours située au-dessus de la troisième sortie 22. D'autres configurations des première et deuxième entrées 11, 21 ainsi que des première et troisième sorties 21, 22 sont bien sûr possible sans sortir du cadre de l'invention.

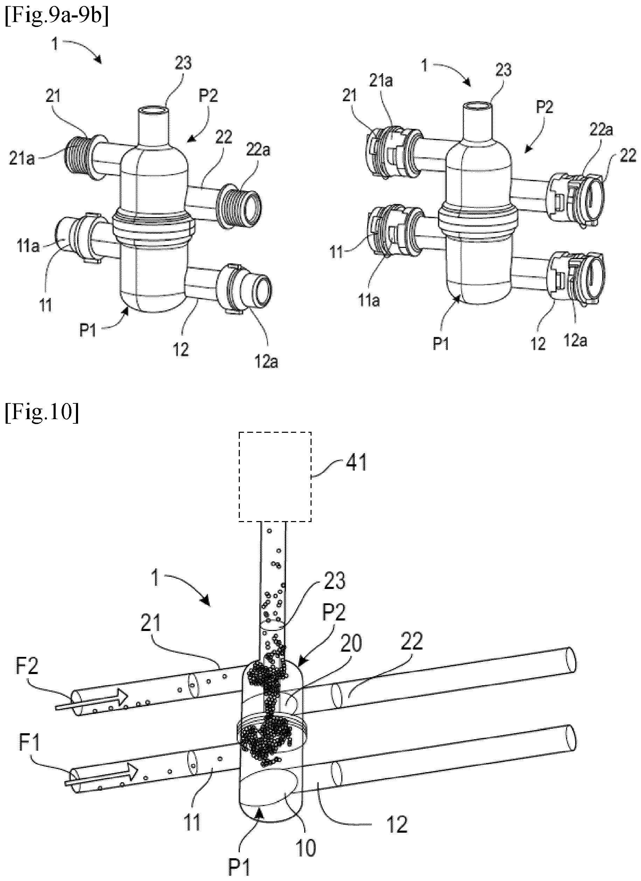

Les figures 9a, 9b montrent des variantes de réalisation de l'invention dans lesquelles les embouts 11a, 12a, 21a, 22a, autrement dit les types de raccordements, sont de types différents. Ils comprennent par exemple un filetage, ou un système d'encliquetage ou tout autres types de moyens de raccordement à un circuit de fluide. Sur la figure 9a, les embouts 21a et 22a comprennent par exemple un filetage alors que les embouts 11a et 12a comprennent un autre type de moyen de raccordement. Sur la figure 9b, les quatre embouts 11a, 12a, 21a, 22a comprennent un système d'encliquetage. Ainsi, il est possible de choisir le type de raccordement de chaque embout indépendamment de celui des autres embouts.

Comme représenté sur la figure 10, l'invention concerne également un circuit de transfert de fluide F1, F2, en particulier d'un véhicule automobile, comportant au moins un dispositif 1 tel que décrit précédemment. Les première 10 et deuxième 20 chambres du circuit sont raccordées par l'intermédiaire de la quatrième sortie 23 à un vase d'expansion 41 commun du circuit de transfert de fluide.

L'invention concerne en outre un procédé d'utilisation d'un dispositif 1 tel que décrit précédemment dans un circuit de transfert de fluide F1, F2, en particulier d'un véhicule automobile, dans lequel un même fluide F1, F2, par exemple caloporteur, circule dans les première 10 et deuxième 20 chambres. Ces fluides F1, F2 sont à une même pression et à des températures différentes.

L'invention peut s'appliquer à n'importe quel type de fluide susceptible de comprendre des bulles de gaz. Elle est développée préférentiellement dans le cas d'un circuit de contrôle thermique de véhicule automobile. L'invention peut notamment être utilisée dans le secteur automobile au sens large (camion, bus, engins de travaux publics, machines agricoles, etc.), sur tous véhicules équipés d'un circuit de transfert de fluide, tel qu'un circuit caloporteur, et ce quel que soit leur mode de propulsion (moteur à combustion, moteur électrique, moteur hybride, etc.).

## Revendications

1. Dispositif (1) de dégazage par effet vortex pour un circuit de transfert de fluide (F1, F2), en particulier d'un véhicule automobile, ce dispositif (1) comportant :
- une première chambre interne (10) reliée à une première entrée (11) de fluide (F1) ainsi qu'à une première sortie (12) de fraction liquide et à une deuxième sortie (13) de fraction gazeuse, la deuxième sortie (13) s'étendant vers le haut le long d'un axe A,
- un premier déflecteur (14) en saillie à l'intérieur de la première chambre (10) pour forcer le fluide (F1) arrivant par la première entrée (11) à former un vortex dans la première chambre (10) autour dudit axe A, afin de séparer les fractions liquide et gazeuse de ce fluide (F1), qui sont expulsées respectivement par les première (12) et deuxième (13) sorties,
**caractérisé en ce qu'**il comprend en outre :
- une seconde chambre interne (20) reliée à une deuxième entrée (21) de fluide (F2) ainsi qu'à une troisième sortie (22) de fraction liquide et à une quatrième sortie (23) de fraction gazeuse, la quatrième sortie (23) de fraction gazeuse s'étendant au moins en partie vers le haut le long dudit axe A, et
- un second déflecteur (24) en saillie à l'intérieur de la seconde chambre (20) pour forcer le fluide (F2) arrivant par la deuxième entrée (21) à former un vortex dans la seconde chambre (20) autour dudit axe A, afin de séparer les fractions liquide et gazeuse de ce fluide (F2), qui sont expulsées respectivement par les troisième (22) et quatrième sorties (23),
et **en ce que** la seconde chambre (20) est située au-dessus de la première chambre (10), la deuxième sortie (13) s'étendant à travers la seconde chambre (20) jusqu'au niveau de la quatrième sortie (23).

2. Dispositif (1) selon la revendication 1, dans lequel la première entrée (11) et la première sortie (12) sont situées à des positions différentes le long de l'axe A.

3. Dispositif (1) selon la revendication 1 ou 2, dans lequel la deuxième entrée (21) et la troisième sortie (22) sont situées à des positions différentes le long de l'axe A.

4. Dispositif (1) selon l'une des revendications précédentes, dans lequel la deuxième sortie (13) s'étend le long de l'axe A jusqu'au-dessus de la deuxième entrée (21).

5. Dispositif (1) selon l'une des revendications précédentes, dans lequel la deuxième sortie (13) comprend une extrémité supérieure libre (13a) qui est écartée axialement de la quatrième sortie (23) ou qui est entourée par cette quatrième sortie (23).

6. Dispositif (1) selon l'une des revendications précédentes, dans lequel il comprend :
- un corps (2) de forme générale cylindrique dont une portion inférieure (3) comprend la première chambre (10) et dont une portion supérieure (4) comprend la seconde chambre (20), et
- des embouts (11a, 21a, 12a, 22a, 23a) de raccordement fluidique en saillie sur le corps (2) qui forme respectivement les première (11) et deuxième (21) entrées, ainsi que les première (12), troisième (22) et quatrième sorties (23).

7. Dispositif (1) selon la revendication précédente, dans lequel il est réalisé à partir de trois pièces (P1, P2, P3) :
- une première pièce (P1) formant la portion inférieure (3) du corps (2) ainsi que les embouts (11a, 12a) de raccordement de la première entrée (11) et de la première sortie (12),
- une deuxième pièce (P2) formant la portion supérieure (4) du corps (2) ainsi que les embouts (21a, 22a, 23a) de raccordement de la deuxième entrée (21) et des troisième (22) et quatrième sortie (23), et
- une troisième pièce (P3) montée à l'intérieur du corps (2) et formant la deuxième sortie (13).

8. Dispositif (1) selon la revendication précédente, dans lequel la troisième pièce (P3) se présente sous la forme d'un entonnoir inversé et comprend une cheminée supérieure (31) formant la deuxième sortie (13) et une coupole (32) inférieure qui est montée dans le corps (2) de façon à délimiter les première (10) et deuxième (20) chambres, cette coupole (32) comportant un orifice central (33) aligné sur l'axe A et débouchant dans ladite cheminée (31).

9. Dispositif (1) selon la revendication précédente, dans lequel la coupole (32) comprend une périphérie externe (34) configurée pour être serrée axialement et/ou radialement entre des bords de jonction (19, 29) des première (P1) et deuxième pièces (P2).

10. Dispositif (1) selon la revendication 8 ou 9, dans lequel la coupole (32) comprend à sa périphérie externe (34) au moins un élément d'indexage (35) configuré pour coopérer par complémentarité de formes avec un élément (15) correspondant de la première pièce (P1) de façon à imposer une position angulaire prédéterminée autour de l'axe A de la troisième pièce (P3) vis-à-vis de la première pièce (P1).

11. Dispositif (1) selon l'une des revendications 8 à 10, dans lequel au moins un joint annulaire (36) d'étanchéité est monté entre la périphérie externe (34) de la coupole (32) et la première pièce (P1) et/ou entre la périphérie externe (34) de la coupole (32) et la deuxième pièce (P2).

12. Dispositif (1) selon l'une des revendications précédentes, dans lequel la deuxième sortie (13) a une section minimale de passage S1 et la quatrième sortie (23) a une section minimale de passage S2, avec S1=k.S2, k étant compris entre 0,8 et 1,2 et de préférence égal à 1.

13. Circuit de transfert de fluide, en particulier d'un véhicule automobile, comportant au moins un dispositif (1) selon l'une des revendications précédentes.

14. Circuit selon la revendication précédente, dans lequel les première (10) et deuxième (20) chambres sont raccordées par l'intermédiaire de la quatrième sortie (23) à un vase d'expansion (41) commun.

15. Procédé d'utilisation d'un dispositif selon l'une des revendications 1 à 12 dans un circuit de transfert de fluide, en particulier d'un véhicule automobile, dans lequel un même fluide (F1, F2), par exemple caloporteur, circule dans les première (10) et seconde chambres (20), ces fluides (F1, F2) étant à une même pression et à des températures différentes.

## Patentansprüche

1. Vorrichtung (1) zur Entgasung durch Vortexwirkung für einen Fluidtransferkreislauf (F1, F2), insbesondere für ein Kraftfahrzeug, wobei die Vorrichtung (1) umfasst:
- eine erste interne Kammer (10), verbunden mit einem ersten Einlass (11) von Fluid (F1) sowie mit einem ersten Auslass (12) flüssiger Fraktion und mit einem zweiten Auslass (13) gasförmiger Fraktion, wobei der zweite Auslass (13) sich entlang einer Achse A nach oben erstreckt,
- einen ersten Deflektor (14), der im Inneren der ersten Kammer (10) hervorsteht, um das Fluid (F1), das durch den ersten Einlass (11) ankommt, zu zwingen, in der ersten Kammer (10) einen Vortex um die Achse A herum zu bilden, um die flüssigen und gasförmigen Fraktionen dieses Fluids (F1) zu trennen, die jeweils durch den ersten (12) und zweiten (13) Auslass ausgestoßen werden,
**dadurch gekennzeichnet, dass** sie des Weiteren umfasst:
- eine zweite interne Kammer (20), verbunden mit einem zweiten Einlass (21) von Fluid (F2) sowie mit einem dritten Auslass (22) flüssiger Fraktion und mit einem vierten Auslass (23) gasförmiger Fraktion, wobei der vierte Auslass (23) gasförmiger Fraktion sich mindestens zum Teil entlang der Achse A nach oben erstreckt, und
- einen zweiten Deflektor (24), der im Inneren der zweiten Kammer (20) hervorsteht, um das Fluid (F2), das durch den zweiten Einlass (21) ankommt, zu zwingen, in der zweiten Kammer (20) einen Vortex um die Achse A herum zu bilden, um die flüssigen und gasförmigen Fraktionen dieses Fluids (F2) zu trennen, die jeweils durch den dritten (22) und vierten (23) Auslass ausgestoßen werden,
und dadurch, dass sich die zweite Kammer (20) oberhalb der ersten Kammer (10) befindet, wobei sich der zweite Auslass (13) quer durch die zweite Kammer (20) bis auf Höhe des vierten Auslasses (23) erstreckt.

2. Vorrichtung (1) nach Anspruch 1, wobei der erste Einlass (11) und der erste Auslass (12) sich entlang der Achse A an unterschiedlichen Positionen befinden.

3. Vorrichtung (1) nach Anspruch 1 oder 2, wobei der zweite Einlass (21) und der dritte Auslass (22) sich entlang der Achse A an unterschiedlichen Positionen befinden.

4. Vorrichtung (1) nach einem der vorstehenden Ansprüche, wobei der zweite Auslass (13) sich entlang der Achse A bis oberhalb des zweiten Einlasses (21) erstreckt.

5. Vorrichtung (1) nach einem der vorstehenden Ansprüche, wobei der zweite Auslass (13) ein oberes freies Ende (13a) beinhaltet, das von dem vierten Auslass (23) axial beabstandet ist oder das von diesem vierten Auslass (23) umgeben ist.

6. Vorrichtung (1) nach einem der vorstehenden Ansprüche, wobei sie beinhaltet:
- einen Körper (2) von allgemein zylindrischer Form, von dem ein unterer Abschnitt (3) die erste Kammer (10) beinhaltet und von dem ein oberer Abschnitt (4) die zweite Kammer (20) beinhaltet, und
- Ansatzstücke (11a, 21a, 12a, 22a, 23a) zum fluidischen Anschluss, die auf dem Körper (2) hervorstehen, die jeweils den ersten (11) und zweiten (21) Einlass sowie den ersten (12), dritten (22) und vierten Auslass (23) bilden.

7. Vorrichtung (1) nach dem vorstehenden Anspruch, wobei sie ausgehend von drei Teilen (P1, P2, P3) ausgeführt ist:
- ein erstes Teil (P1), das den unteren Abschnitt (3) des Körpers (2) sowie die Ansatzstücke (11a, 12a) zum Anschluss des ersten Einlasses (11) und des ersten Auslasses (12) bildet,
- ein zweites Teil (P2), das den oberen Abschnitt (4) des Körpers (2) sowie die Ansatzstücke (21a, 22a, 23a) zum Anschluss des zweiten Einlasses (21) und des dritten (22) und vierten Auslasses (23) bildet, und
- ein drittes Teil (P3), das im Inneren des Körpers (2) montiert ist und den zweiten Auslass (13) bildet.

8. Vorrichtung (1) nach dem vorstehenden Anspruch, wobei das dritte Teil (P3) in Form eines umgedrehten Trichters vorliegt und einen oberen Schacht (31), der den zweiten Auslass (13) bildet, und eine untere Kuppel (32) beinhaltet, das in dem Körper (2) derart montiert ist, um die erste (10) und zweite Kammer (20) abzugrenzen, wobei diese Kuppel (32) eine zentrale Öffnung (33) umfasst, die mit der Achse A ausgerichtet ist und in dem Schacht (31) mündet.

9. Vorrichtung (1) nach dem vorstehenden Anspruch, wobei die Kuppel (32) einen externen Umfang (34) beinhaltet, konfiguriert, um axial und/oder radial zwischen den Ankopplungsrändern (19, 29) des ersten (P1) und zweiten Teils (P2) eingespannt zu werden.

10. Vorrichtung (1) nach Anspruch 8 oder 9, wobei die Kuppel (32) an ihrem externen Umfang (34) mindestens ein Indexierungselement (35) beinhaltet, konfiguriert zum Zusammenwirken durch Komplementarität von Formen mit einem Element (15), das dem ersten Teil (P1) entspricht, derart, um eine vorher festgelegte Winkelposition um die Achse A des dritten Teils (P3) gegenüber dem ersten Teil (P1) aufzuerlegen.

11. Vorrichtung (1) nach einem der Ansprüche 8 bis 10, wobei mindestens eine ringförmige Dichtung (36) zwischen dem externen Umfang (34) der Kuppel (32) und dem ersten Teil (P1) und/oder dem externen Umfang (34) der Kuppel (32) und dem zweiten Teil (P2) montiert ist.

12. Vorrichtung (1) nach einem der vorstehenden Ansprüche, wobei der zweite Auslass (13) einen minimalen Durchgangsquerschnitt S1 aufweist und der vierte Auslass (23) einen minimalen Durchgangsquerschnitt S2 aufweist, wobei S1 = k.S2, wobei k zwischen 0,8 und 1,2 liegt und vorzugsweise gleich 1 ist.

13. Fluidtransferkreislauf, insbesondere eines Kraftfahrzeugs, umfassend mindestens eine Vorrichtung (1) nach einem der vorstehenden Ansprüche.

14. Kreislauf nach dem vorstehenden Anspruch, wobei die erste (10) und zweite Kammer (20) mittels des vierten Auslasses (23) an einen gemeinsamen Ausgleichsbehälter (41) angeschlossen sind.

15. Verwendungsverfahren einer Vorrichtung nach einem der Ansprüche 1 bis 12 in einem Fluidtransferkreislauf, insbesondere eines Kraftfahrzeugs, wobei ein gleiches Fluid (F1, F2), zum Beispiel Wärmeträgerfluid, in der ersten (10) und zweiten Kammer (20) zirkuliert, wobei diese Fluide (F1, F2) bei einem gleichen Druck und bei unterschiedlichen Temperaturen vorliegen.

## Claims

1. A vortex degassing device (1) for a fluid transfer circuit (F1, F2), in particular of a motor vehicle, this device (1) comprising:
- a first internal chamber (10) connected to a first inlet (11) of a fluid (F1) as well as to a first outlet (12) of a liquid fraction and to a second outlet (13) of a gaseous fraction, the second outlet (13) extending upwards along an axis A,
- a first deflector (14) projecting inside the first chamber (10) to force the fluid (F1) arriving through the first inlet (11) to form a vortex in the first chamber (10) around said axis A, in order to separate the liquid and gaseous fractions of this fluid (F1), which are expelled respectively through the first (12) and second (13) outlets,
**characterized in that** it further comprises:
- a second internal chamber (20) connected to a second inlet (21) of a fluid (F2) as well as to a third outlet (22) of a liquid fraction and to a fourth outlet (23) of a gaseous fraction, the fourth outlet (23) of the gaseous fraction extending at least partly upwards along said axis A, and
- a second deflector (24) projecting inside the second chamber (20) to force the fluid (F2) arriving through the second inlet (21) to form a vortex in the second chamber (20) around said axis A, in order to separate the liquid and gaseous fractions of this fluid (F2), which are expelled respectively through the third (22) and fourth outlets (23),
and **in that** the second chamber (20) is located above the first chamber (10), the second outlet (13) extending through the second chamber (20) to the level of the fourth outlet (23).

2. The device (1) according to claim 1, wherein the first inlet (11) and the first outlet (12) are located at different positions along the axis A.

3. The device (1) according to claim 1 or 2, wherein the second inlet (21) and the third outlet (22) are located at different positions along the axis A.

4. The device (1) according to any of the preceding claims, wherein the second outlet (13) extends along the axis A to above the second inlet (21).

5. The device (1) according to any of the preceding claims, wherein the second outlet (13) comprises a free upper end (13a) which is axially spaced from the fourth outlet (23) or surrounded by the fourth outlet (23).

6. The device (1) according to one of the preceding claims, wherein it comprises:
- a generally cylindrical body (2), a lower portion (3) of which comprises the first chamber (10) and an upper portion (4) of which comprises the second chamber (20), and
- fluidic connection end caps (11a, 21a, 12a, 22a, 23a) projecting from the body (2), which form the first (11) and second (21) inlets and the first (12), third (22) and fourth (23) outlets respectively.

7. The device (1) according to the preceding claim, wherein it is made from three pieces (P1, P2, P3):
- a first piece (P1) forming the lower portion (3) of the body (2) as well as the connection end caps (11a, 12a) of the first inlet (11) and of the first outlet (12),
- a second piece (P2) forming the upper portion (4) of the body (2) as well as the connection end caps (21a, 22a, 23a) of the second inlet (21) and of the third (22) and fourth outlet (23), and
- a third piece (P3) mounted inside the body (2) and forming the second outlet (13).

8. The device (1) according to the preceding claim, wherein the third piece (P3) is in the form of an inverted funnel and comprises an upper chimney (31) forming the second outlet (13) and a lower dome (32) which is mounted in the body (2) so as to delimit the first (10) and second (20) chambers, this dome (32) comprising a central orifice (33) aligned on the axis A and opening into said chimney (31).

9. The device (1) according to the preceding claim, wherein the dome (32) comprises an external periphery (34) configured to be clamped axially and/or radially between joining edges (19, 29) of the first (P1) and second (P2) piece.

10. The device (1) according to claim 8 or 9, wherein the dome (32) comprises at its external periphery (34) at least one indexing element (35) configured to cooperate in a form-fitting manner with a corresponding element (15) of the first piece (P1) so as to impose a predetermined angular position around the axis A of the third piece (P3) relative to the first piece (P1).

11. The device (1) according to one of claims 8 to 10, wherein at least one annular seal (36) is mounted between the external periphery (34) of the dome (32) and the first piece (P1) and/or between the external periphery (34) of the dome (32) and the second piece (P2).

12. The device (1) according to one of the preceding claims, wherein the second outlet (13) has a minimum passage section S1 and the fourth outlet (23) has a minimum passage section S2, with S1=k.S2, k being between 0.8 and 1.2 and preferably equal to 1.

13. A fluid transfer circuit, in particular of a motor vehicle, comprising at least one device (1) according to one of the preceding claims.

14. The circuit according to the preceding claim, wherein the first (10) and second (20) chambers are connected by means of the fourth outlet (23) to a common surge tank (41).

15. A method for using a device according to one of claims 1 to 12 in a fluid transfer circuit, in particular of a motor vehicle, in which a same fluid (F1, F2), for example a heat-transfer fluid, circulates in the first (10) and second (20) chambers, these fluids (F1, F2) being at the same pressure and at different temperatures.
